# EUROPÄISCHE PATENTSCHRIFT

(11) **EP 1 052 137 B1**
(45) Veröffentlichungstag und Bekanntmachung des Hinweises auf die Patenterteilung: **02.04.2003**
(21) Anmeldenummer: 00108911.9
(22) Anmeldetag: 27.04.2000
(51) Int. Cl.: B60N 2/02

(54) **Elektrischer Sitzversteller**
Electrical seat adjuster
Dispositif électrique de réglage de siège

(30) Priorität: 12.05.1999 DE 19921922
(43) Veröffentlichungstag der Anmeldung: 15.11.2000
(73) Patentinhaber: ISE Innomotive Systems Europe GmbH, 51702 Bergneustadt (DE)
(72) Erfinder: Janisch, Mirko, 53721 Siegburg (DE); Dörre, Wolfgang, 51647 Gummersbach (DE)
(74) Vertreter: Fuchs Mehler Weiss & Fritzsche

(56) Entgegenhaltungen:
- WO-A-95/16587
- WO-A-97/16326
- DE-A- 3 111 466
- DE-A- 3 503 897
- DE-A- 3 724 038
- DE-A- 3 919 378
- FR-A- 2 457 196
- US-A- 5 292 164
- PATENT ABSTRACTS OF JAPAN vol. 1995, no. 3, 28. April 1995 (1995-04-28) & JP 06 340810 A (TONEN CHEM CORP), 13. Dezember 1994 (1994-12-13)

## Beschreibung

Die Erfindung bezieht sich auf einen elektrischen Sitzversteller für ein horizontales Verstellen eines Kraftfahrzeugsitzes gemäß dem Oberbegriff des Anspruchs 1.

Derartige elektrische Sitzversteller, wie sie beispielsweise aus der DE 35 03 897 A1, der DE 35 08 515 A1 und prinzipiell auch aus der DE 31 11 466 A1 bekannt geworden sind, weisen typischerweise ein erstes, an dem Fahrzeugsitz befestigtes, parallel zueinander angeordnetes Schienenpaar auf, mit dem der Fahrzeugsitz auf einem zweiten, fahrzeugfest angebrachten, parallel zueinander angeordneten Schienenpaar, verschiebbar halterbar ist. Die Sitzversteller besitzen ferner eine Antriebsanordnung bestehend aus einem Elektromotor mit zwei gegenüberliegend senkrecht zur Erstreckung der Schienen angebrachten Antriebswellen, an denen jeweils ein Winkelgetriebe mit einer parallel zu der Erstreckung der Schienen verlaufenden Gewindespindel angebracht ist, sowie eine Antriebs-Mutter für jede Gewindespindel, die jeweils in einem Mutterhalter mechanisch aufgenommen ist. Dabei ist die Elektromotor/Getriebeanordnung an einem Schienenpaar, dieses überbrückend, und der Mutterhalter jeweils an einer Schiene des anderen Schienenpaares fest angebracht.

Bei Betätigung des Motors werden die Gewindespindeln verdreht und es tritt eine lineare Relativbewegung zwischen den Mutterhaltern und der Elektromotor/Getriebeanordnung und damit zwischen den beiden Schienenpaaren auf.

Diese Mutterhalter mit Antriebsmuttern sind eine wesentliche Komponente eines elektrischen Sitzverstellers. Ihre Aufgabe ist die Umwandlung der Drehbewegung der Getriebespindel in die lineare Bewegung der Ober- oder Unterschiene (je nach Zuordnung). Typischerweise sind dabei in den Sitzverstellern metallische Antriebsmuttern vorgesehen, die an einem metallischen Mutterhalter angeschweißt sind. Eine metallische Antriebsmutter ist zwar mechanisch sehr stabil, hat aber keinen geräuscharmen Lauf.

Es ist daher auch bekannt (DE 35 03 897 A1 sowie DE 39 19 378 C2), die Antriebsmuttern aus Kunststoff herzustellen, deren Lauf geräuscharmer ist. In mechanischer Hinsicht entstehen praktisch keine Nachteile, da auch die Getrieberäder der Winkelgetriebe aus Kunststoff bestehen und somit eine in etwa gleichgroße Kräftekette gegeben ist.

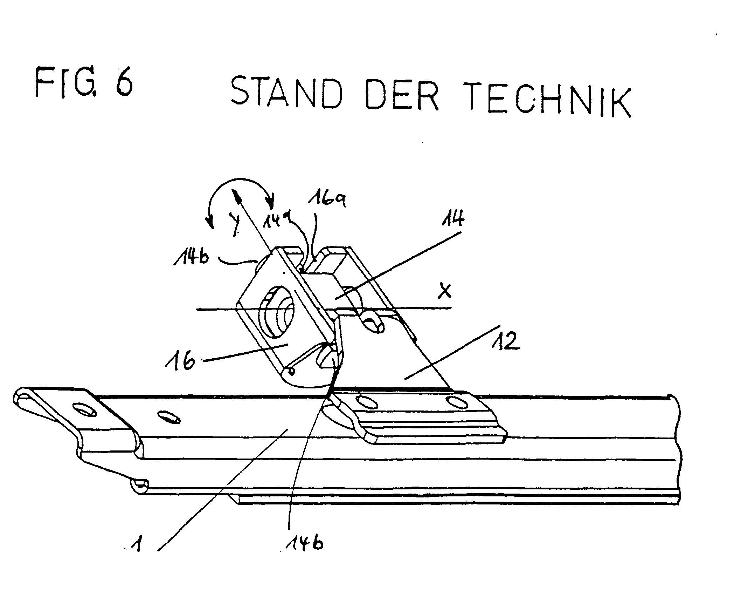

Im bekannten Fall, die Fig. 6 zeigt in einer Ausschnitt-Darstellung den bekannten an der fahrzeugfesten Schiene 1 befestigten metallischen. Mutterhalter 12 mit einem daran angeschweißten kastenförmigen Mutterkäfig 16, in dem eine Kunststoffmutter 14 aufgenommen ist, ist diese Kunststoff-Antriebsmutter quaderförmig ausgebildet und besitzt an den beiden gewindefreien Flächen zwei Lager-Zapfen 14 a, die in Ausnehmungen 16 a des Mutterkäfigs aufgenommen sind und am freien Ende jeweils Querstege 14 b aufweisen, mit denen die Antriebsmutter 14 in dem Mutterkäfig fixiert ist.

Bei dieser bekannten Ausführungsform werden die Kräfte zwischen Kunststoff-Antriebsmutter und Mutterhalter bzw. Mutterkäfig überwiegend über die beiden Lager-Zapfen übertragen, die daher hohen mechanischen Flächen-Belastungen ausgesetzt sind. Bei bestimmten Situationen besteht daher die Gefahr des Abscherens der Lager-Zapfen in den Ausnehmungen 16 a des Mutterkäfigs 12.

Bei dem Zusammenbau der elektrischen Sitzversteller entstehen ferner fertigungsbedingte Abweichungen von dem Sollzustand, aus denen wiederum Fluchtungsfehler in den unterschiedlichsten Achsenrichtungen resultieren, d.h. der notwendige Parallellauf zwischen Gewindespindeln und Mutterhaltern ist beeinträchtigt mit der Konsequenz eines zum Teil schwergängigen und mit starken Geräuschen begleiteten Laufes. Diese Fluchtungsfehler können bei metallischen, angeschweißten Muttern praktisch überhaupt nicht und bei Kunststoff-Antriebsmuttern gemäß dem Stand der Technik nach Fig. 6 nur in einer Richtung ausgeglichen werden. Gemäß dieser Fig. 6 erfolgt das Ausrichten um eine Achse dadurch, daß die Antriebsmutter 14 in dem Mutterkäfig 16 mittels der an ihren Seiten angebrachten Lager-Zapfen 14 a um die Y-Achse verdrehbar aufgenommen ist.

Der bekannte Mutterhalter kann daher nur die Fluchtungsfehler in der XZ-Ebene ausgleichen (Z = vertikale Richtung). Eine entstehende Klemmung durch einen Achsenversatz in Y-Richtung kann der bekannte Mutterhalter nicht ausgleichen. Dies kann sich nachteilig auf die Leichtgängigkeit und damit auf das Geräuschverhalten des Antriebes auswirken.

Der Erfindung liegt die Aufgabe zugrunde, den eingangs bezeichneten elektrischen Sitzversteller so auszubilden, daß die Festigkeit der Halterung der Kunststoff-Antriebsmutter erhöht wird und auch ein Versatzausgleich in Y-Richtung möglich ist.

Die Lösung dieser Aufgabe gelingt ausgehend von dem elektrischen Sitzversteller für einen schienengeführten Sitz eines Kraftfahrzeuges, mit einer Elektromotor/Getriebeanordnung zur Erzeugung einer horizontalen Relativbewegung zwischen Sitz und Fahrzeugboden, die zwei parallel zueinander verlaufende Getriebespindeln aufweist, denen jeweils eine Kunststoff-Antriebsmutter mit einer Gewinde-Bohrung zugeordnet ist, die in einem Mutterkäfig eines Mutterhalters in ersten und zweiten Stirnseiten des Mutterkäfigs mit Verdrehspiel um eine Drehachse senkrecht zur Gewindespindelachse aufgenommen ist, wobei der Mutterkäfig zwei gegenüberliegende Öffnungen für den Durchtritt der zugehörigen Gewindespindel aufweist, gemäß der Erfindung dadurch, daß die Kunststoff-Antriebsmutter zylindrisch ausgebildet ist, mit einem zentrischen Verriegelungs-Zapfen betrieblich spielermöglichender Länge auf einer ersten Stirnseite und einer zapfenlosen zweiten Stirnseite, der Mutterkäfig als rohrförmige Aufnahme für die zylindrische Kunststoff-Antriebsmutter ausgebildet ist, wobei der Mutterkäfig auf der ersten Stirnseite für das Einbringen der zylindrischen Kunststoff-Antriebsmutter offen und mit der zweiten Stirnseite fest an dem Mutterhalter angebracht ist, der an dieser Stelle eine Öffnung für den Durchtritt des zentrischen Verriegelungs-Zapfens hat, und Mittel zum Fixieren der Kunststoff-Antriebsmutter in in dem Mutterkäfig vorgesehen sind, derart, daß die Kunststoff-Antriebsmutter betrieblich um ein durch die Zapfenlänge vorgegebenes Spiel linear senkrecht zur Gewindespindelachse beweglich ist.

Diese Art der Ausbildung und Lagerung der Kunststoff-Antriebsmutter ermöglicht den Ausgleich der Fluchtungsfehler nicht nur in XZ-Ebene, sondern gleichzeitig auch den Versatzausgleich in Y-Richtung. Die Lagefehler, die beim Zusammenbau der Antriebskomponenten entstehen, sind dabei durch die Summe der Einbautoleranzen bedingt.

Die neue Ausbildung und Lagerung der Kunststoff-Antriebsmutter wirkt sich positiv auf die Leichtgängigkeit und damit auf das Geräuschverhalten des Antriebes aus.

Die kompakte Konstruktion weist darüber hinaus eine deutliche Festigkeitserhöhung auf.

Eine besonders einfache Fixierung der Kunststoff-Antriebsmutter in dem Mutterkäfig ist gemäß einer Weiterbildung der Erfindung dann gegeben, wenn am Ende des zentrischen Verriegelungs-Zapfens ein sich parallel zur Gewindebohrung der Kunststoff-Antriebsmutter erstreckender Quersteg angeformt und die Öffnung in dem Mutterhalter als Langloch ausgebildet ist, das sich senkrecht zu den Durchtrittsöffnungen in dem Mutterkäfig für den Durchtritt der Gewindespindeln erstreckt.

Zur zusätzlichen Begrenzung des Axialspieles, d.h. um ein Auftreffen der Gewindespindel auf den Rand der Durchtrittsöffnungen in dem Mutterkäfig zu vermeiden, ist die Anordnung gemäß einer Ausgestaltung der Erfindung so ausgebildet, daß an der dem zentrischen Verriegelungs-Zapfen abgewandten Stirnseite der Kunststoff-Antriebsmutter ein ringförmiger Wulst angeformt ist, dessen Durchmesser größer als der Innendurchmesser des rohrförmigen Mutterkäfigs ist. Anstelle des wulstförmigen Anschlages kann auch die zapfenseitige Stirnseite zusammen mit der gegenüberliegenden Fläche des Mutterkäfigs als Anschlag dienen.

Eine besonders stabile und langlebige Kunststoff-Antriebsmutter läßt sich herstellen, wenn die Kunststoff-Antriebsmutter aus dem Kunststoff Zytel™ (Du Pont) besteht.

Die Herstellung der Kunststoff-Antriebsmutter ist mit Vorteil relativ einfach, wenn diese im Wege des Spritzgießens erfolgt.

Weitere Vorteile und ausgestaltende Merkmale der Erfindung ergeben sich anhand der Beschreibung eines in den Zeichnungen dargestellten Ausführungsbeispieles.

Es zeigen:
- Fig. 1: in einer schematischen Darstellung eine Draufsicht auf die wesentlichen Antriebselemente eines Sitzverstellers für Fahrzeugsitze,
- Fig. 2: eine perspektivische Darstellung eines gemäß einer vorteilhaften Ausführungsform der Erfindung ausgebildeten Mutterhalters der Antriebselemente nach Fig. 1 im vergrößerten Maßstab,
- Fig. 3: eine Seitenansicht des erfindungsgemäßen Mutterhalters in Verbindung mit einer ersten Schnittansicht entlang der Linie A-A im Figurenteil A und einer zweiten Schnittansicht entlang der Linie B-B im Figurenteil B,
- Fig. 4: eine Draufsicht auf den erfindungsgemäßen Mutterhalter in Verbindung mit einer Schnittdarstellung entlang der Linie C-C im Figurenteil A,
- Fig. 5: in einer Schnittdarstellung entsprechend Fig. 4A eine Variante des Mutterhalters nach Fig. 4, und
- Fig. 6: die Ausbildung des Mutterhalters nach dem herkömmlichen Stand der Technik.

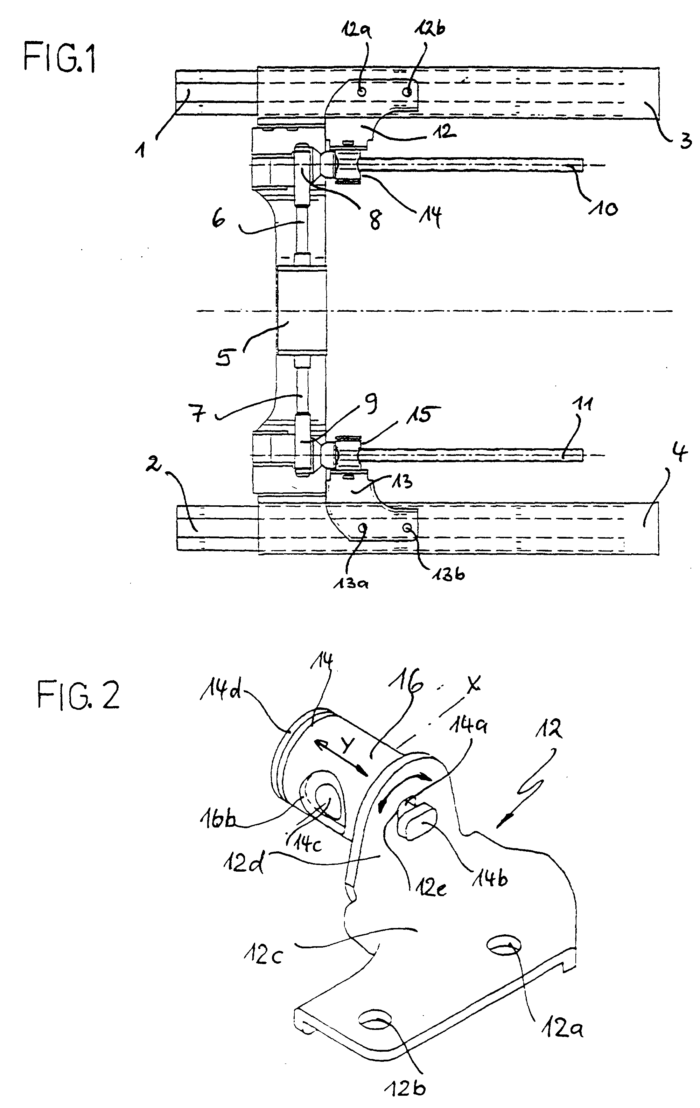

Die Fig. 1 zeigt in einer schematischen Draufsicht-Darstellung die wesentlichen Antriebselemente eines elektrischen Sitzverstellers für Kraftfahrzeuge. Es ist ein erstes Paar von Schienen 1, die Unterschienen, vorgesehen, die parallel zueinander auf dem Fahrzeugboden befestigt sind. Auf diesen Unterschienen 1, 2 ist jeweils eine Schiene 3, 4 eines weiteren Schienenpaares, die Oberschienen, verschiebbar gehaltert, Typischerweise ist dabei der zu verstellende, nicht dargestellte Fahrzeugsitz mit den Oberschienen 3, 4 verbunden. Prinzipiell kann die Anordnung auch umgekehrt getroffen sein.

Der Sitzversteller weist eine Antriebsanordnung auf, die aus einem Elektromotor 5 besteht, der zwei gegenüberliegend senkrecht zur Erstreckung der Schienen 1, 2, 3 und 4 angebrachte Antriebswellen 6, 7 aufweist, die jeweils Teil eines integrierten Winkelgetriebes 8, 9 sind, das jeweils an dem Elektromotor 5 angeflanscht ist oder integral mit ihm verbunden ist. Jedes der beiden Winkelgetriebe 8, 9 weist eine Gewindespindel 10, 11 auf, die sich parallel zu den Schienen 1 bis 4 erstrecken. Die Elektromotor/Getriebeanordnung 5 bis 11 ist dabei typischerweise fest mit dem Schienenpaar 3, 4 (Oberschiene), deren Schienen überbrückend, verbunden, d.h. sie bewegt sich typischerweise mit dem Fahrzeugsitz bei einer Verstellung der Oberschiene mit.

Die Antriebsanordnung weist ferner zwei, je einer Gewindespindel 10, 11 zugeordnete Mutterhalter 12, 13 auf, an denen jeweils eine erfindungsgemäß ausgebildete und gehalterte Antriebs-Mutter 14, 15 angebracht ist. Typischerweise sind die Mutterhalter 12, 13 über Befestigungslöcher 12a, 12b bzw. 13a, 13b fest mit der Unterschiene 1, 2 und damit fahrzeugfest verbunden, d.h. bei einer Verstellung des Sitzes bleiben die Antriebs-Muttern 14, 15 ortsfest und die Motor/Getrieheanordnung 5-9 mit den Gewindespindeln 10, 11 bewegt sich mit dem Fahrzeugstz.

Die Anordnung kann, wie bereits erwähnt, auch umgekehrt getroffen sein, d.h. die Mutterhalter sind dann mit der Oberschiene 3, 4 und die Motor/Getriebeanordnung ist mit der Unterschiene 1, 2 verbunden. Es kommt letztlich auf die Relativbewegung zwischen beiden Schienenpaaren an.

Bis auf die Mutterhaltern 12, 13 besteht der Sitzversteller nach Fig. 1 aus konventionellen, bewährten Komponenten, so daß diese hier nicht näher beschrieben werden müssen. Die Erfindung ist in den Mutterhaltern 12, 13 enthalten.

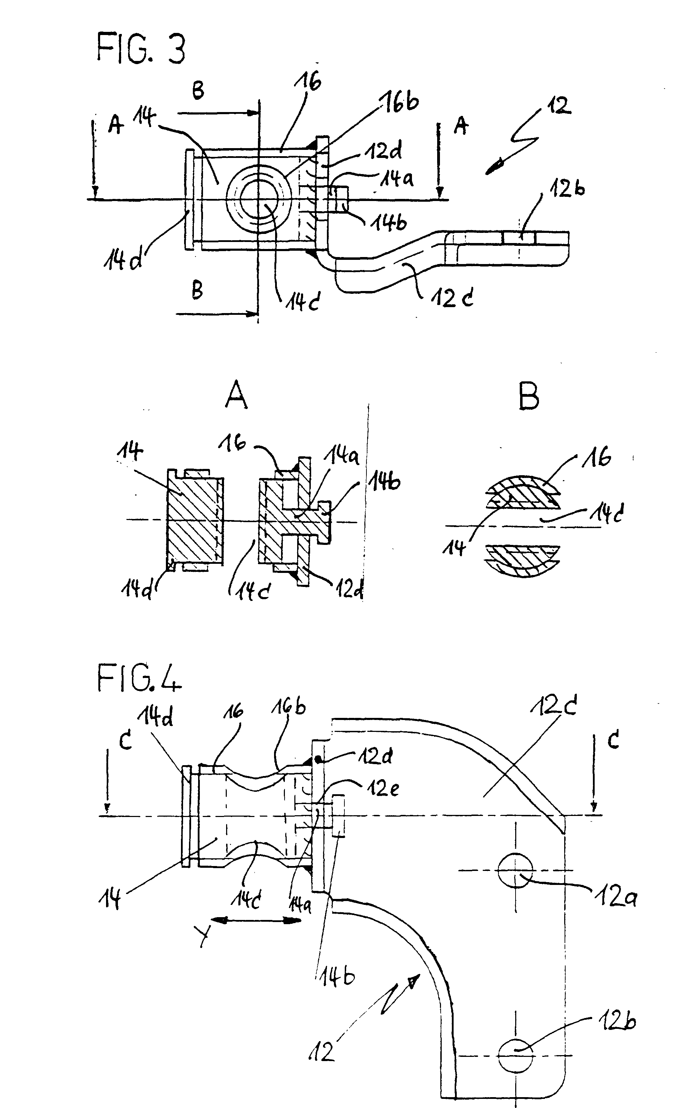

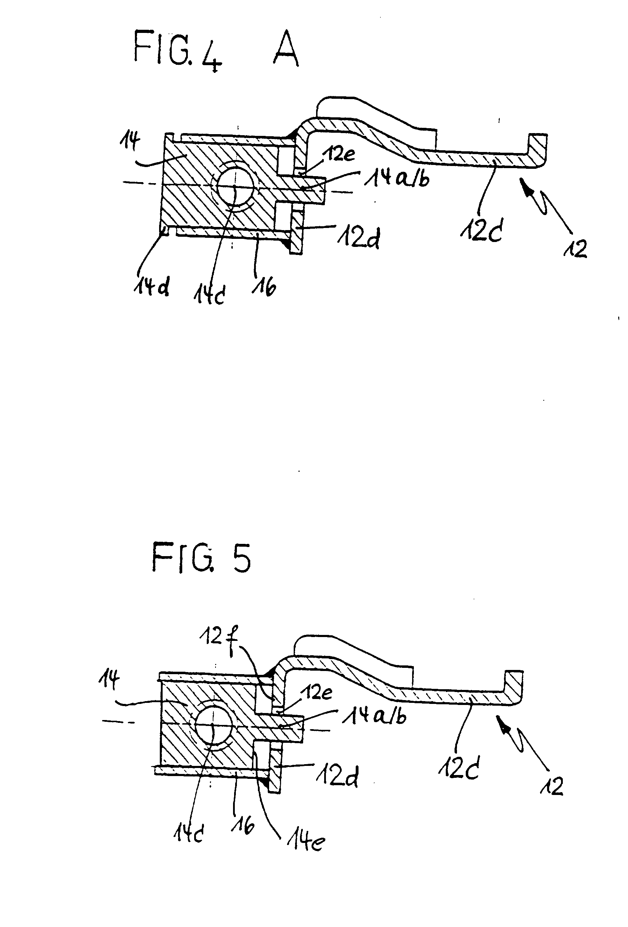

Die Fig. 2 zeigt daher eine perspektivische Ansicht des oberen Mutterhalters 12 in Fig 1. Weitere Ansichten des Mutterhalters sind in der Fig. 3 mit den Figurenteilen A, B und in Fig. 4 in Verbindung mit dem Figurenteil A dargestellt.

Dieser Mutterhalter 12 besteht aus einem flachen, versteiften Formteil 12c aus Stahlblech oder einem anderen Metall. Dies erlaubt eine Herstellung des Mutterhalters mit bekannten Methoden der Blechverarbeitung, der dadurch wirtschaftlich produzierbar ist.

Dieses Formteil 12c besitzt einen horizontalen Befestigungsabschnitt mit den Befestigungslöchern 12a und 12b sowie einen vertikalen Abschnitt 12d, der eine längliche Ausnehmung 12e aufweist, und an dem ein hohlzylindrisch ausgebildeter Mutterkäfig 16, vorzugsweise in Form eines metallischen Rohrstückes, fest angebracht, vorzugsweise angeschweißt, ist. An der dem vertikalen Abschnitt 12d abgewandten Stirnseite ist dabei der Mutterkäfig offen. Am Mantel des hohlzylindrischen Mutterkäfigs 16 sind zwei Öffnungen 16 b gegenüberliegend für den Durchtritt der zugehörigen Gewindespindel 10 ausgebildet.

In dem hohlzylindrischen Mutterkäfig 16 ist eine zylinderförmige, massive Antriebsmutter 14 aus Kunststoff aufgenommen, die eine Gewindebohrung 14c fluchtend mit den Öffnungen 16b im Mutterkäfig 16 besitzt. Diese zylinderförmige Antriebsmutter weist auf der einen Seite - wie insbesondere auch die Figuren 3A und 4A zeigen - einen zentrischen zylindrischen Fortsatz, d.h. einen Zapfen 14 a mit einem Quersteg 14b, der sich parallel zur Gewindebohrung 14c erstreckt, und auf der anderen Stirnseite einen erhöhten Rand 14d auf. Die zylindrische Kunststoff-Antriebsmutter 14 wird bei der Montage zunächst vom offenen Ende her in den Mutterkäfig mit dem Steg 14b parallel zu der Langlochöffnung 12e eingeschoben. Der Steg 14b durchdringt dabei diese Öffnung 12e und durch eine Drehung um 90° verriegelt dann der Steg 14b die Antriebsmutter 14 in dem Mutterkäfig in der in Fig. 2 dargestellten Position.

Wie man insbesondere den Figuren 3A und 4A entnehmen kann, hat der Zapfen 14 a eine ausreichende Länge, damit sich die Antriebsmutter 14 in Y-Richtung um einen bestimmten Betrag verschieben und damit auch ein Achsenversatz zwischen Antriebsmutter und Gewindespindel in Y-Richtung kompensierbar ist. Der hohe Rand 14 d einerseits und der Quersteg 14 b andererseits begrenzen dabei die Bewegung der Antriebsmutter 14, damit die metallische Gewindespindel den Rand der Öffnung 16b in dem metallischen Mutterkäfig nicht berühren kann, so daß entsprechende metallische Geräusche vermieden werden können.

Wie in Fig. 5 dargestellt, kann der hohe Rand 14d entfallen. Die Begrenzung erfolgt dann durch den Anschlag der Stirnfläche 14e der Antriebsmutter 14 auf die gegenüberliegende Fläche 12e des Mutterhalters.

Durch die zylindrische Ausbildung des Fortsatzes 14 a kann sich zusätzlich die Antriebsmutter drehen, d.h. einen Fluchtungsfehler in der XZ-Ebene ausgleichen.

Durch die zylindrische Ausbildung der Antriebsmutter 14 und ihre Aufahme in einem hohlzylindrischen Mutterkäfig 16 kann die Flächenpressung sehr deutlich verringert werden, so daß der Zapfen 14 a deutlich geringer als im bekannten Fall mechanisch beansprucht wird.

Vorzugsweise besteht die zylindrische Antriebsmutter 14 aus dem Kunststoff Zytel mit der Bezeichnung E 70 G30 HS L NC-10 und wird vorzugsweise im Wege des Spritzgießens hergestellt, was sich auch wirtschaftlich hinsichtlich der Kostensituation auswirkt.

Die Fixierung der zylindrischen Antriebsmutter 14 in dem Mutterkäfig 16 mittels des Quersteges 14 b in der Längsöffnung 12 e ist eine sehr vorteilhafte Ausführungsform, weil sie eine schnelle und einfache Montage der Kunststoff-Antriebsmutter in dem Mutterkäfig erlaubt. Grundsätzlich können aber auch andere Fixiermittel, z.B. Aufbringen einer Mutter auf einen Gewindeabschnitt am Ende des Zapfens 14 a nach dessen Durchtritt durch die Öffnung 12e, die dann kreisrund sein kann, vorgesehen sein.

## Patentansprüche

1. Elektrischer Sitzversteller für einen schienengeführten Sitz eines Kraftfahrzeuges, mit einer Elektromotor/Getriebeanordnung (6-9) zur Erzeugung einer horizontalen Relativbewegung zwischen Sitz und Fahrzeugboden, die (6-9) zwei parallel zueinander verlaufende Getriebespindeln (10, 11) aufweist, denen jeweils eine Kunststoff-Antriebsmutter (14, 15) mit einer Gewinde-Bohrung (14 c) zugeordnet ist, die in einem Mutterkäfig (16) eines Mutterhalters (12, 13) in ersten und zweiten Stirnseiten des Mutterkäfigs mit Verdrehspiel um eine Drehachse senkrecht zur Gewindespindelachse aufgenommen ist, wobei der Mutterkäfig zwei gegenüberliegende Öffnungen (16 b) für den Durchtritt der zugehörigen Gewindespindel (10, 11) aufweist, **dadurch gekennzeichnet, daß**
- die Kunststoff-Antriebsmutter (14, 15) zylindrisch ausgebildet ist, mit einem zentrischen Verriegelungs-Zapfen (14 a) betrieblich spielermöglichender Länge auf einer ersten Stirnseite und einer zapfenlosen zweiten Stirnseite,
- der Mutterkäfig (16) als rohrförmige Aufnahme für die zylindrische Kunststoff-Antriebsmutter (14) ausgebildet ist, wobei der Mutterkäfig auf der ersten Stirnseite für das Einbringen der zylindrischen Kunststoff-Antriebsmutter (14) offen und mit der zweiten Stirnseite fest an dem Mutterhalter (12) angebracht ist, der an dieser Stelle eine Öffnung (12 e) für den Durchtritt des zentrischen Verriegelungs-Zapfens (14 a) hat, und
- Mittel (14 h) zum Fixieren der Kunststoff-Antriebsmutter (14) in dem Mutterkäfig (16) vorgesehen sind, derart, daß die Kunststoff-Antriebsmutter betrieblich um ein durch die Länge des Verriegelungs-Zapfens (14 a) vorgegebenes Spiel linear senkrecht zur Gewindespindelachse beweglich ist.

2. Sitzversteller nach Anspruch 1, **dadurch gekennzeichnet, daß** am Ende des zentrischen Verriegelungs-Zapfens (14 a) ein sich parallel zur Gewindebohrung (14 c) der Kunststoff-Antriebsmutter (14) erstreckender Quersteg (14 b) angeformt und die Öffnung (12 e) in dem Mutterhalter (12) als Langloch ausgebildet ist, das sich senkrecht zu den Durchtrittsöffnungen (16 b) in dem Mutterkäfig (16) für den Durchtritt der Gewindespindeln (10, 11) erstreckt.

3. Sitzversteller nach Anspruch 1 oder 2, **dadurch gekennzeichnet, daß** an der zweiten Stirnseite der Kunststoff-Antriebsmutter (14) ein ringförmiger Wulst (14 d) angeformt ist, dessen Durchmesser größer als der Innendurchmesser des rohrförmigen Mutterkäfigs (16) ist.

4. Sitzversteller nach einem der Ansprüche 1 bis 3, **dadurch gekennzeichnet, daß** die Kunststoff-Antriebsmutter (14) aus dem Kunststoff Zytel™ besteht.

5. Sitzversteller nach einem der Ansprüche 1 bis 4, **dadurch gekennzeichnet, daß** die Kunststoff-Antriebsmutter (14) im Wege des Spritzgießens hergestellt ist.

6. Sitzversteller nach einem der Ansprüche 1 bis 5, **dadurch gekennzeichnet, daß** der hohlzylindrische Mutterkäfig (16) als Metallrohr ausgebildet ist.

7. Sitzversteller nach einem der Ansprüche 1 bis 6, **dadurch gekennzeichnet, daß** der Mutterhalter (12) als Blechteil ausgebildet ist.

8. Sitzversteller nach Anspruch 6 und 7, **dadurch gekennzeichnet, daß** das Metallrohr an dem Blechteil angeschweißt ist.

## Claims

1. Electrical seat adjuster for a rail-guided seat of a motor vehicle, having an electric motor/gear arrangement (6-9) for producing a relative horizontal movement between the seat and the vehicle floor, which arrangement (6-9) has two driving spindles (10, 11) which extend parallel with each other and with each of which a plastics drive nut (14, 15) having a threaded hole (14c) is associated, which drive nut (14, 15) is received in a nut cage (16) of a nut holder (12, 13) in first and second end faces of the nut cage with torsional play about an axis of rotation perpendicular to the axis of the threaded spindle, the nut cage having two opposing openings (16b) for the passage of the associated threaded spindle (10, 11), **characterised in that**
- the plastics drive nut (14, 15) is of cylindrical form, having a central locking pin (14a) having a length which allows play during operation at a first end face and a second pin-free end face,
- the nut cage (16) is in the form of a tubular receptacle for the cylindrical plastics drive nut (14), the nut cage being open at the first end face for the introduction of the cylindrical plastics drive nut (14) and being fitted by means of the second end face securely to the nut holder (12) which, at this position, has an opening (12e) for the introduction of the central locking pin (14a), and
- means (14b) are provided in the nut cage (16) for fixing the plastics drive nut (14) in such a manner that the plastics drive nut is movable in a linear perpendicular manner relative to the axis of the threaded spindle during operation with play which is predetermined by the length of the locking pin (14a).

2. Seat adjuster according to claim 1, **characterised in that** a transverse web (14b) which extends parallel with the threaded hole (14c) of the plastics drive nut (14) is formed on the end of the central locking pin (14a) and the opening (12e) in the nut holder (12) is in the form of an elongate hole which extends perpendicularly to the through-openings (16b) in the nut cage (16) for the introduction of the threaded spindles (10, 11).

3. Seat adjuster according to claim 1 or 2, **characterised in that** an annular bead (14d), whose diameter is greater than the inside diameter of the tubular nut cage (16), is formed on the second end face of the plastics drive nut (14).

4. Seat adjuster according to any one of claims 1 to 3, **characterised in that** the plastics drive nut (14) comprises the plastics material Zytel™.

5. Seat adjuster according to any one of claims 1 to 4, **characterised in that** the plastics drive nut (14) is produced by way of injection moulding.

6. Seat adjuster according to any one of claims 1 to 5, **characterised in that** the hollow-cylindrical nut cage (16) is in the form of a metal tube.

7. Seat adjuster according to any one of claims 1 to 6, **characterised in that** the nut holder (12) is in the form of a sheet metal element.

8. Seat adjuster according to claims 6 and 7, **characterised in that** the metal tube is welded to the sheet metal element.

## Revendications

1. Dispositif électrique de réglage de siège pour un siège guidé par rails d'un véhicule automobile avec un ensemble (6-9) composé d'un moteur électrique et de réducteurs pour réaliser un mouvement relatif horizontal entre le siège et le plancher du véhicule, lequel ensemble (6-9) comprend deux broches filetées (10, 11) s'étendant parallèlement entre elles, auxquelles est attribué respectivement un écrou d'entraînement en matériau synthétique (14, 15) avec un taraudage (14c), qui est logé perpendiculairement à l'axe de la broche filetée dans une cage d'écrou (16) d'un support d'écrou (12, 13) dans des premiers et des deuxièmes côtés frontaux de la cage d'écrou avec un jeu de rotation autour d'un axe de rotation, la cage d'écrou comprenant deux ouvertures opposées (16b) pour le passage de la broche filetée correspondante (10, 11), **caractérisé**
- **en ce que** l'écrou d'entraînement en matériau synthétique (14, 15) est conçu de forme cylindrique et comprend un premier côté frontal avec un ergot de verrouillage central (14a) d'une longueur permettant du jeu en cours de fonctionnement et un deuxième côté frontal sans ergot,
- **en ce que** la cage d'écrou (16) est conçue comme logement de forme tubulaire pour l'écrou d'entraînement cylindrique en matériau synthétique (14), la cage d'écrou étant ouverte sur le premier côté frontal pour l'introduction de l'écrou d'entraînement cylindrique en matériau synthétique (14) et étant, avec le deuxième côté frontal, fixée solidement sur le support d'écrou (12), qui comprend à cet endroit une ouverture (12e) pour le passage de l'ergot central de verrouillage (14a) et
- **en ce que** des moyens (14b) sont prévus dans la cage d'écrou (16) pour la fixation de l'écrou d'entraînement en matériau synthétique (14), et ceci de telle manière que, lors du fonctionnement, l'écrou d'entraînement en matériau synthétique soit mobile dans le sens linéaire et perpendiculairement à l'axe de la broche filetée de la valeur d'un jeu imposé par la longueur de l'ergot de verrouillage (14a).

2. Dispositif de réglage de siège selon la revendication 1, **caractérisé en ce qu'**à l'extrémité de l'ergot de verrouillage central (14a) est formée une traverse (14b) s'étendant parallèlement au taraudage (14c) de l'écrou d'entraînement en matériau synthétique (14) et **en ce que** l'ouverture (12e) dans le support d'écrou (12) est réalisée comme trou oblong, qui s'étend perpendiculairement aux ouvertures de passage (16b) se trouvant dans la cage d'écrou (16) et servant au passage des broches filetées (10, 11).

3. Dispositif de réglage de siège selon la revendication 1 ou 2, **caractérisé en ce que** sur le deuxième côté frontal de l'écrou d'entraînement en matériau synthétique (14) est formé un renflement de forme annulaire (14d), dont le diamètre est plus important que le diamètre intérieur de la cage d'écrou de forme tubulaire (16).

4. Dispositif de réglage de siège selon l'une des revendications 1 à 3, **caractérisé en ce que** l'écrou d'entraînement en matériau synthétique (14) est constitué du matériau synthétique Zytel™.

5. Dispositif de réglage de siège selon l'une des revendications 1 à 4, **caractérisé en ce que** l'écrou d'entraînement en matériau synthétique (14) est réalisé par un procédé de moulage par injection.

6. Dispositif de réglage de siège selon l'une des revendications 1 à 5, **caractérisé en ce que** la cage d'écrou cylindrique creuse (16) est conçue comme tube métallique.

7. Dispositif de réglage de siège selon l'une des revendications 1 à 6, **caractérisé en ce que** le support d'écrou (12) est réalisé comme pièce en tôle.

8. Dispositif de réglage de siège selon les revendications 6 et 7, **caractérisé en ce que** le tube métallique est soudé sur la pièce en tôle.
